# EUROPEAN PATENT SPECIFICATION

(11) **EP 3 571 049 B1**
(45) Date of publication and mention of the grant of the patent: **09.08.2023**
(21) Application number: 18741660.7
(22) Date of filing: 16.01.2018
(51) Int. Cl.: B29B 7/60, B29B 7/72, B29B 7/00, C09J 175/04, B29B 7/48, B01F 35/81, B32B 37/12

(54) **OPEN TIME COMPENSATED GLUING METHOD, RELATED MANUFACTURING ARRANGEMENT AND COMPUTER PROGRAM**
OFFENZEITKOMPENSIERTES KLEBEVERFAHREN, DARAUF BEZOGENE HERSTELLUNGSANORDNUNG SOWIE COMPUTERPROGRAMM
PROCÉDÉ DE COLLAGE À COMPENSATION DE TEMPS OUVERT, AGENCEMENT DE FABRICATION ASSOCIÉ AINSI PROGRAMME INFORMATIQUE

(30) Priority: 23.01.2017 FI 20175055
(43) Date of publication of application: 27.11.2019
(73) Proprietor: Oy Pro-Hydro AB, 95450 Tornio (FI)
(72) Inventor: KUISMANEN, Esa, 95450 Tornio (FI)
(74) Representative: Berggren Oy
(86) International application number: PCT/FI2018/050027
(87) International publication number: WO 2018/134476

(56) References cited:
- EP-A1- 1 301 283
- EP-A1- 2 955 004
- WO-A1-01/49489
- WO-A1-01/49489
- WO-A1-2011/141402
- WO-A1-2011/141402
- WO-A1-2016/113464
- CN-B- 101 693 175
- DE-A1-102005 026 050
- DE-A1-102014 202 016

## Description

The invention relates to a method, a gluing apparatus arrangement and a computer program product, with which the efficiency of the manufacturing arrangement of the glue paste can be improved by adjusting the open time of the used glue paste.

### Prior art

In the gluing of large part elements together, usually glue mixtures are used, which are manufactured during gluing by mixing two or more glue components with an appropriate mixing device. Examples of possible glue components, which are manufactured by mixing two or more components, are different polyurethane and epoxy glues.

For example, epoxy glue and polyurethane glue are two-component glues. There are countless different kinds of polyurethanes depending on the required properties. The properties can be, among others, open time, clamping time, thermal resistance, chemical resistance and strength. The components of the polyurethane glue are stored in two separate containers before manufacturing the glue mixture. When manufacturing the glue, the components are mixed and simultaneously a hardener is added, which starts the cross-linking process in the glue. After this, the glue is spread either as one or more layers onto the surfaces to be glued and the surfaces are clamped together. The hardener causes a chemical reaction in the glue, as a result of which the glue mixture is cross-linked to its final hardness.

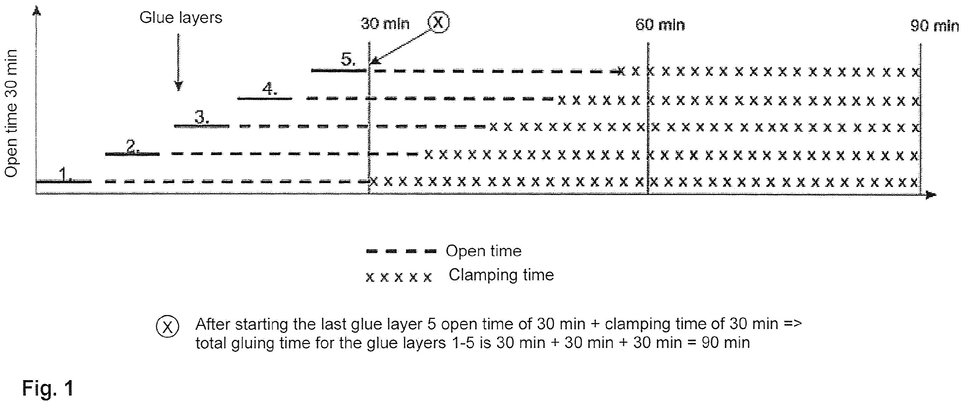

**Figure 1** shows glue layers necessary for gluing six elements together in the gluing according to the prior art and the glue spreading times and the clamping times necessary for them. The part elements to be glued under the first glue layer 1 of Figure 1 and between each glue layer 1-5 and on the last glue layer 1 are not shown in Figure 1.

The glue is adhesive during a so-called open time, which is a glue type specific property. The open time varies from glue to glue from couple of seconds to even several hours. The basic components used in the glue and the selected hardener affect the length of the open time. The open time also determines the clamping time necessary for the gluing, the magnitude of which clamping time is 1-3 times the length of the open time.

In the example of Figure 1, the open time of the glue mixture selected for gluing the laminate is 30 minutes. In order to succeed in gluing all the part elements together, the manufactured glue must be separately spread on each part element. The open time of the layer number 1 expires in 30 minutes in point X. Before the expiry of the open time of the layer number 1 in 30 minutes, there must be time to laminate also four other glue layers numbers 2, 3, 4 and 5 on the part elements of the laminate structure. When the last glue layer number 5 has been spread between the two uppermost part elements of the laminate in about 30 minutes from the start of the first glue layer number 1, the clamping of the part elements of the laminate must be started, since the open time of the first glue layer 1 expires. In the example of Figure 1, a clamping time of 60 minutes is still needed, during which all the glue layers 1-5 are hardened nearly equally hard between the different part elements of the laminates. Thus, in order to succeed in gluing the part elements of the laminate together requires as a whole about 90 minutes time in the example of Figure 1.

If the temperature of the space, where the gluing is performed, changes to one direction or the other, then the open time of the selected glue mixture in Figure 1 changes as well. If the temperature rises for example 10 degrees Celsius, the open time of the exemplary glue of Figure 1 halves to 15 minutes. On the other hand, if the temperature drops 10 degrees Celsius, the open time of the glue increases to 60 minutes. In both cases, there may appear problems in the gluing if the change of the temperature is not taken into consideration during gluing.

Document DE 10 2005 026050 discloses a method and device for applying beads of a pasty mass comprising a two-component hardenable adhesive. Document DE 10 2014 202016 discloses an application method and an application station for multi-component adhesive mixture. Document WO 01/49489 discloses a method of manufacturing composite products, wherein glue is applied to at least one surface of each element. Document WO 2016/113464 discloses a manufacturing method and manufacturing arrangement for a silicone composition.

### Object of the invention

The object of the invention is to provide a new glue paste manufacturing method and manufacturing apparatus, with which the time required by the gluing process of a multilayer laminate to be manufactured by gluing can be shortened compared to the time required by the gluing according to the prior art.

In the glue paste manufacturing method according to claim 1 and a related manufacturing arrangement according to claim 6 comprising a manufacturing apparatus the ambient temperature of the production area is taken into consideration. Furthermore, the open time of the glue paste finished in the manufacturing method and in the manufacturing apparatus is shortened towards the end of the gluing process by adding the proportion of the glue component having a short open time in the glue mixture to be used. An advantage of the invention is that the clamping time needed in the gluing of a part element of a multilayer laminate together can be shortened by 50% compared to the gluing process according to the prior art.

Further, an advantage of the invention is that the change of the ambient temperature of the gluing object to one direction or the other can be compensated by the method according to the invention so that the change of temperature does not affect the final result of the gluing.

Further, an advantage of the invention is that the reaction rate curves of the glue mixtures measured experimentally in different temperatures can be used in selecting the glue mixture when starting the gluing.

Further claimed is a computer program product according to claim 11 for executing the claimed method.

Some advantageous embodiments of the invention are presented in the dependent claims.

The basic idea of the invention is the following: In the glue paste manufacturing method according to the invention the open times of the different components of the glue to be manufactured are utilized so that the clamping time of the part elements of the laminate to be glued together can be shortened. The glue paste manufacturing apparatus to be used in the glue paste manufacturing method according to the invention comprises a control unit, which determines or by which the optimal starting mixing ratio of the different glue components is determined at the starting moment of the gluing process on the basis of the temperature of the production area used in the gluing of the elements together and on the basis of the temperature of the part elements of the laminate to be glued. Further, the reaction rate curves measured experimentally with a mixing ratio of the different components can be preferably utilized in the determination of the starting mixing ratio.

When the gluing progresses, the control unit preferably continuously and steplessly controls the preferably known reaction rate curve by using the mixture ratio of the different components of the glue to be manufactured so that towards the end of the glue manufacturing process the proportion of the glue component having the shortest open time is increased in the finished glue. By proceeding this way, in order to obtain gluing, the clamping time of the part elements of the laminate is mainly determined by the clamping time required by a glue component having the shortest open time after the fact that the spreading of the glue having the shortest open time on the last part element of the laminate is finished before the expiry of the open time of the first glue layer.

In the following, the invention will be described in detail. In the description, reference is made to the enclosed drawings, in which
- Figure 1: shows by way of an example glue layers manufactured for the gluing of two part elements together according to the prior art and the total time required by the gluing,
- Figure 2: shows by way of an example a glue paste manufacturing apparatus according to the invention,
- Figure 3: shows by way of an example glue layers manufactured for the gluing of two part elements together according to the prior art and the total time required by the gluing, and
- Figure 4: shows as an exemplary flow chart the main stages of the glue manufacturing method according to the invention.

The embodiments in the following description are only exemplary and a person skilled in the art can carry out the basic idea of the invention also in some other way than what is described in the description. Even though it may be referred to an embodiment or embodiments in several places of the description, this does not mean that the reference would be directed to only one described embodiment or that the described characteristic would be usable only in one described embodiment. The individual characteristics of two or more embodiments may be combined and new embodiments of the invention may thus be provided.

**Figure** 1 is presented in connection with the description of the prior art.

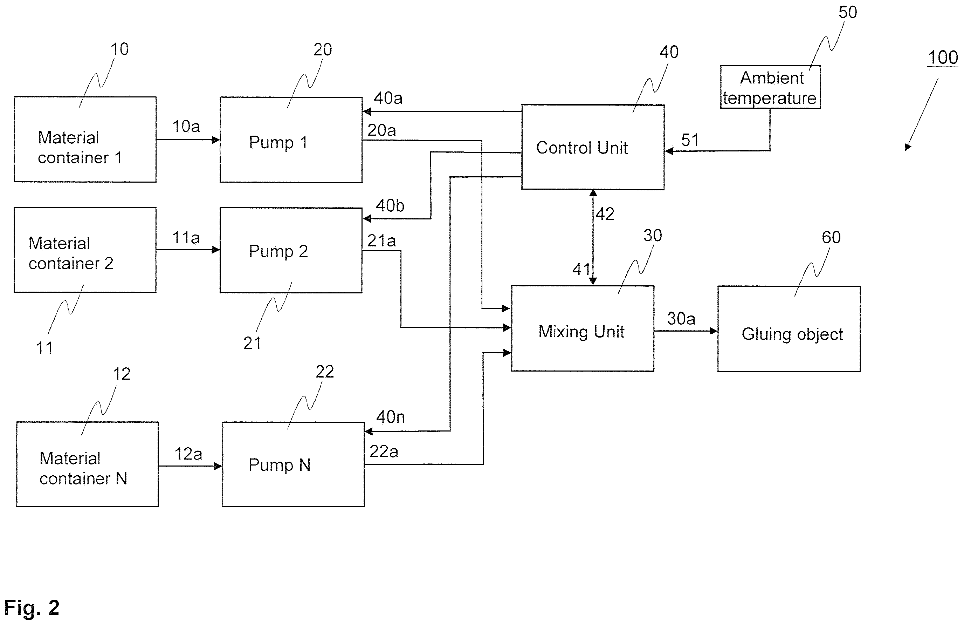

**Figure** 2 shows a glue paste manufacturing apparatus 100 according to the invention. The functions of the glue paste manufacturing apparatus 100 are controlled by a control unit 40. The control unit can preferably be for example a data processing device, a PC or a tablet, built up for the glue paste manufacturing apparatus 100. In all alternative embodiments the control unit 40 comprises a processor, memory units, a power source, a display and a user interface. The computer program to be utilized in the glue manufacturing method according to the invention is preferably stored in the memory unit of the control unit 40, from where the processor of the control unit 40 retrieves and performs the computer program commands to be utilized in the glue manufacturing method.

The glue needed in the gluing object 60 is mixed in the mixing unit 30 from two or more glue components to meet the requirements of the gluing object 60.

The first component of the glue to be used is in the material container 1, reference 10. Due to the properties of the glue to be manufactured, other components are mixed to the first component from at least one further material container 2, reference 11. The components can be for example a hardener and different kinds of filling agents.

Each material container 10-12 of the glue component is connected to its own pump through a feeding pipe. In the example of Figure 2, the material container 10 is connected to the pump 1 through a feeding pipe 10a of the respective pump, reference 20. Respectively, the material container 11 is connected to the pump 2, reference 21, through a feeding pipe 11a and the material container 12 is connected to the pump N through a feeding pipe 12a of the respective pump, reference 22. The operation of the pumps 20-22 is controlled by the control unit 40, which belongs to the glue paste manufacturing apparatus 100, so that the first glue component from the container 10 and other components from the containers 11-12 are fed to the mixer 30 in a mixture ratio determined by the open time required by the gluing object 60.

Preferably, in the beginning of the glue manufacturing process, the open times of all glue components and also the ambient temperature in the gluing object are taken into consideration in the determination of the mixture ratio of the components. All these affect the open time to be generated for the glue mixture to be manufactured.

From each pump 20-22, an outlet pipe 20a, 21a and 22a of its own is connected to the inlet of the mixing unit 30. The operation principle of the mixing unit 30 can be selected according to the glue to be manufactured and/or according to the gluing object 60. The mixing unit 30 can be for example a contrarotary spiral mixer. The glue paste manufactured in the mixing unit 30 is guided through the outlet pipe 30a to the actual gluing object 60.

The operation of the glue paste manufacturing apparatus 100 is controlled by the control unit 40. The control unit 40 receives the ambient temperature information either trough a wireless or wire data transmission 51 from an electronic thermometer 50, which is near the gluing object 60. In a preferred embodiment of the invention the thermometer measures the surface temperature of the part elements to be glued together of the laminate to be manufactured at the starting moment of the gluing. The open time scheduled for the gluing object 60 can be preferably entered through the user interface, which belongs to the control unit 30.

On the basis of the measured ambient temperature or the surface temperature of the part elements to be glued, on the basis of the reaction rate curves measured for the different mixing ratios of the glue components and on the basis of the open time scheduled for the gluing object 60, the determination and control program of the glue mixing ratio installed in the control unit 40 determines the mixture ratio of the glue components, with which mixture ratio the glue manufacture is started in the mixing unit 30. Preferably, at the starting moment of the manufacture, 80% of the glue component having the longest open time is added to the glue mixture and the rest 20% can be of one or more glue components having a shorter open time.

The starting commands, which preferably comprise running speed determinations of the pumps 20, 21 and 22, by which the mixture ratio of the components of the glue to be manufactured is determined, are sent by the control unit 40 through the connections 40a, 40b and 40n. The operation and mode of the mixing unit 30 are controlled and monitored by the control unit 40 through the connections 41 and 42.

In the glue manufacturing apparatus 100 according to the invention, the mixture ratio of the components of the glue to be manufactured is continuously changed during the glue manufacture. The ambient temperature data stored in the control unit 40 and the open time of the glue mixture set as a target are utilized by the control unit 40 when changing the mixture ratio of the components of the glue mixture so that when the glue layers of the last two part elements of the laminate are finished, 80% of the glue mixture is of the glue component having the shortest open time and 20% is of the glue component having the longest open time.

The control unit 30 preferably continuously (steplessly) changes the mixture ratio of the glue to be manufactured from the starting mixture ratio towards the end mixture ratio.

In a preferred embodiment of the invention, the mixture ratios of the glue to be manufactured are preferably changed stepwise when a new glue layer is spread on the existing already glued part element in the gluing object 60. Also in this embodiment, the lowest (the first) glue layer has the longest open time and the uppermost (the last) glue layer between the two uppermost part elements of the laminate has the shortest open time.

When using both manufacturing methods according to the invention, the clamping time needed for one gluing is approximately shortened by 50% compared to the gluing according to the prior art (Figure 1), in which glue, the open time of which is not changed during the gluing process, is used.

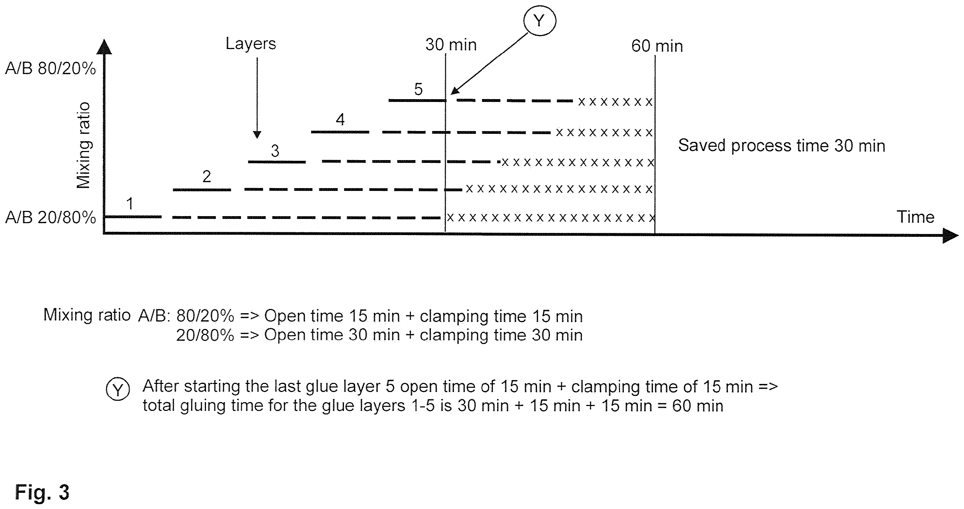

**Figure 3** shows as an exemplary schematic representation, how the manufacturing method according to the invention substantially shortens the time needed for the gluing compared to a gluing situation similar to the example of Figure 1. The open times and the mixture ratios of the different glue components in the beginning and at the end of the gluing shown in Figure 3 are only exemplary. The lowest, the intermediate and the uppermost part elements of the laminate of the glue layers 1-5 are not shown in Figure 3.

In the example of Figure 3, the glue is mixed from the two glue components A and B (the glue hardener is not shown in the Figure). The glue component has an open time of 15 minutes and a substantially equally long clamping time. The second glue component B has an open time of 30 minutes and a substantially equally long clamping time. It is obvious for the person skilled in the art that it is possible to apply the invention also with other kinds of mixture ratios depending on the purpose of use. When the glue manufacture in the example of Figure 3 is started, the mixture ratio of the glue components A/B in the glue is 20/80%. Thus, the open time of the glue is slightly shorter than the open time of 30 minutes of the component B.

When the gluing progresses from the layer number 1, which is the glue layer between the two lowest part elements of the laminate to be manufactured to the layer number 5, with which the uppermost part element of the laminate is glued to the laminate, the mixture ratio A/B of the glue is changed so that in the glue manufacture, when the need of glue for the gluing object 60 ends in point "Y", the mixture ratio A/B of the glue is 80/20%. In that case, the open time of the glue is slightly longer than the open time of 15 minutes of the component B. In point "Y", also the last glue layer has been spread, whereby the clamping of the elements can be started. In the beginning of the clamping, the last spread glue layers are still in the open time mode, wherein the start of the clamping stage is possible after 30 minutes. In about 60 minutes from the start of the gluing process all the glue layers 1-5 between the part elements of the laminate have hardened substantially equally hard, wherein the laminate to be glued can be removed from the clamping device.

Depending on the purpose of application (how hard the glue must be hardened) the necessary clamping time can be either shorter or longer than what can be calculated from the open time alone.

In the first preferred embodiment of the invention the mixture ratio A/B of the glue components is continuously changed as a function of time from the mixture ratio of 20/80% of the starting situation to a mixture ratio of 80/20%. By acting this way, the clamping time of the last glue layer and the clamping time required by the lowest layer substantially expire at the same time in about 60 minutes from the start of the gluing in the gluing object 60. In this case, the hardness of the glue layers 1-5 between all part elements of the laminate to be manufactured is of the same hardness category, wherein the clamping can be stopped. With the gluing method and the gluing apparatus 100 according to the invention, by shortening the clamping time, a time saving of about 30 % compared to the gluing time needed with a manufacturing technique according to the prior art of Figure 1, is thus achieved.

In another preferred embodiment of the invention the mixture ratio A/B of the glue components is changed stepwise when a new glue layer is laminated on the already existing glue layer in the gluing object 60.

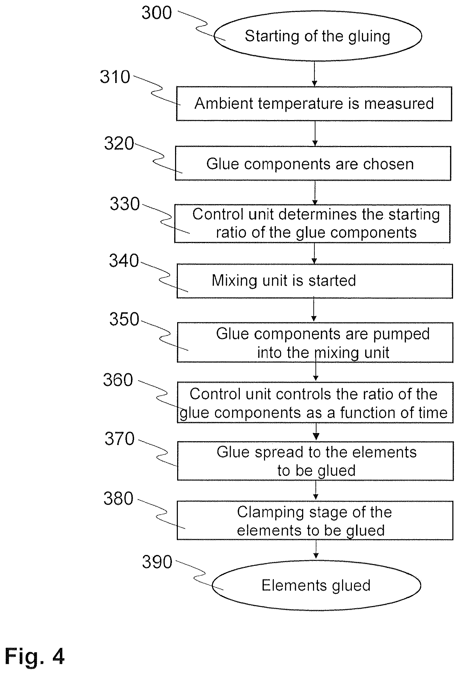

**Figure 4** shows as an exemplary flow chart the main stages of the gluing method according to the invention. In connection with the description of the method, it is referred to the example shown in Figure 3 and to the glue components A and B used therein. However, the invention is not only limited to the components A and B according to Figure 3 or to their exemplary mixture ratios in Figure 3.

In stage 300, the glue manufacture is started.

In stage 340, the pumps 20-22 of the glue components and the mixing unit 30 are started, whereby the glue manufacture starts.

In stage 310, the control unit 40 of the glue paste manufacturing apparatus 100 stores the temperature measured by the thermometer 50 in the gluing object 60 in its memory.

In stage 320, the different glue components A and B are selected. The selection can either be based on the choices made by the person operating the glue manufacturing apparatus or the selection can, in some cases, be made by the control unit 40 of the glue manufacturing apparatus 100 with an artificial intelligence software stored therein.

In stage 330, the control unit 40 determines the mixture ratio of the glue components A/B at the starting moment of the glue manufacture. The determination of the mixture ratio is based on the selected glue components A and B, on the measured ambient temperature and on the target-oriented time needed for the gluing, which time is calculated from the open times and clamping times needed with different mixture ratios of the glue components A/B. Also the reaction rate curves measured experimentally with the mixture ratios of the different components in different temperatures can be preferably utilized in the determination of the starting mixture ratio.

In stage 340, the control unit 40 of the glue paste manufacturing apparatus 100 sends the starting commands to the mixing unit 30 and to the pumps 20-22. The starting commands of the pumps include standard values for such rotation speeds, that the mixture ratio A/B of the glue of the starting situation corresponds to the mixture ratio determination made in stage 330, for example the mixture ratio A/B of 20/80 % of Figure 3.

In stage 350, the pumps 20-22 of the glue paste manufacturing apparatus 100 pump the different glue components in a mixture ratio A/B determined by the control unit 40, each with its own outlet pipe 20a, 21a and 22a to the inlet connectors 30 of the mixer. The pumps 20-22 suck the glue components A and B from the material containers 10-12 through the pump-specific feeding pipes 10a-12a.

In stage 360, the glue mixing unit 30 and the pumps 20-22 are in operation. The control unit 40 of the glue paste manufacturing apparatus 100 continuously economizes the rotation rate of the pumps 20-22 so that the mixture ratio of the glue components A/B changes so that the open time of the glue mixture shortens as a function of time towards the open time of the glue component B having the shortest open time. The glue received from the mixing unit 30 is spread during the stage 360 as one or more glue layers on the surface of at least one element to be glued.

In stage 370, it is stated that all the glue layers necessary for the manufacture of the laminate between the different part elements of the laminate are finished (point "Y" in Figure 3), thus, the manufacturing process of the glue is interrupted.

In stage 380, the elements to be glued together are clamped against each other. The clamping stage lasts about 30 minutes with the values of the open time and of the clamping time of the glue components A and B having the open time and clamping time according to the example of Figure 3.

In stage 390, the elements are glued together.

The process steps describing the gluing process shown in Figure 4 can be accomplished with computer program commands, which are performed in an appropriate universal processor or in a special processor, which is a part of the control unit 40 of the glue paste manufacturing apparatus 100. The computer program commands can be stored in a computer-readable media, such as a data disk or a memory of the control unit 40, from where the processor of the control unit 40 can retrieve said computer program commands and implement them. The references to the computer-readable media can for example also contain special components, such as programmable USB Flash memories, logic arrays (FPLA), application-specific integrated circuits (ASIC) and signal processors (DSP).

## Claims

1. A gluing method for gluing part elements of a laminate structure, in which method:
- at least two glue components and a hardener to be used in the gluing of the part elements are selected (320) at the control unit of the glue manufacturing apparatus (100),
- the control unit (40) of the glue manufacturing apparatus (100) determines (330) the mutual mixing ratio of the selected glue components at the starting moment of the glue manufacturing process
- pumping of the different glue components to the mixing unit (30) is started (340) after the determination of the mixing ratio
- the glue components are pumped (350) to the mixing unit (30) with component-specific pumps (20, 21, 22) in a mixture ratio determined by the control unit (40),
**characterized in that,** the selected glue components are polyurethane-based components having open times of different lengths and in the method, the control unit (40) adjusts (360) the mixing ratio of the glue components to be administered on a part element as a function of time so that the open time of the glue coming out from the mixing unit (30) shortens after each part element fastened to the laminate structure towards the end (370) of the gluing process, whereby the clamping time (380) of the part elements of the laminate structure to be glued together is as long as the clamping time of the last administered glue layer having the shortest open time, upon the expiry of which all the glue layers have reached the target hardness.

2. Gluing method according to claim 1, **characterized in that** in the determina-tion of the mutual mixing ratio of the glue components at the starting moment of the process, the temperature of the production area used in the gluing is measured (310) and that the reaction rate curves of the different mixture ratios in the measured temperature are taken into consideration in the determination.

3. Gluing method according to claim 2, **characterized in that** in the method, the temperature rise of the production area is compensated by increasing the proportion of the glue component having the longest open time in the finished glue mixture and that the temperature drop of the production area is compensated by increasing the proportion of the glue component having the shortest open time in the finished glue mixture.

4. Gluing method according to claim 1, **characterized in that** the mixing ratio of the glue paste components is continuously changed (360) so that the proportion of the glue component having the shortest open time is increased with continuous control until the end of the glue manufacturing process of the elements to be glued together.

5. Gluing method according to claim 1, **characterized in that** the mixing ratio of the glue paste components is changed (360) stepwise when starting the manufacture of a new glue layer on the part element fastened last onto the laminate.

6. A manufacturing arrangement of a laminate structure comprised of part elements, which arrangement comprises a glue paste manufacturing apparatus (100), for a method according to claims 1 to 5, comprising:
- material containers (10, 11, 12) for the glue paste components
- a separate pump (20, 21, 22) for each glue paste component, which pumps are arranged to pump the components of the glue paste to be manufactured through the outlet pipes (20a, 21a, 22a) to the mixing unit (30),
- a control unit (40) of the glue paste manufacturing apparatus (100), which control unit is arranged:
- to determine (330) the mutual mixing ratio of the glue components at the starting moment of the glue manufacturing process
- to start the pumping of the different glue components in connection with the starting (340) of the mixing unit (30)
- to pump (350) the glue components to the mixing unit (30) with component-specific pumps (20, 21, 22) in a mixture ratio determined by the control unit (40),
**characterized in that,** the selected glue components are polyurethane-based components having open times of different lengths and the control unit (40) is arranged to control (360) the ratio of the components of the glue to be administered on a part element as a function of time, so that the open time of the glue coming out from the mixing unit (30) shortens after every part element fastened to the laminate structure towards the end of the gluing process, whereby the clamping time of the part elements to be glued together of the laminate to be manufactured is as long as the clamping time of the last administered glue layer having the shortest open time, upon the expiry of which time all the glue layers have reached the target hardness.

7. Manufacturing arrangement of a laminate structure comprised of part elements according to claim 6, **characterized in that** in the manufacturing apparatus, the temperature of the production area to be used in the gluing is arranged to be measured (310), which temperature is arranged to be taken into consideration in the determination of the mutual mixing ratio of the glue components at the starting moment of the glue manufacturing process and that the reaction rate curves of the different mixture ratios in the measured temperature are arranged to be taken into consideration in the determination.

8. Manufacturing arrangement of a laminate structure comprised of part elements according to claim 7, **characterized in that** in the manufacturing apparatus, the temperature rise of the production area is arranged to be compensated by increasing the proportion of the glue component having the longest open time in the finished glue mixture and that the temperature drop of the production area is arranged to be compensated by increasing the proportion of the glue component having the shortest open time in the finished glue mixture.

9. Manufacturing arrangement of a laminate structure comprised of part elements according to claim 6, **characterized in that in that** the mixing ratio of the glue paste components is arranged to be continuously changed (360), so that the proportion of the glue component having the shorter open time is increased with continuous control until the end of the glue manufacturing process.

10. Manufacturing arrangement of a laminate structure comprised of part elements according to claim 6, **characterised in that** the mixing ratio of the glue paste components is arranged to be changed (360) stepwise when starting the glue manufacture on the part element last glued to the laminate.

11. A computer program product, which comprises computer program code means stored on a computer-readable storage medium, which code means, when said computer program product is run on a computer for executing the method according to claims 1 to 5, are arranged
- to select (320) the at least two glue components and the hardener of the glue to be used in the gluing of the laminate structure,
- to determine (330) the mutual mixing ratio of the selected glue components at the starting moment of the glue manufacturing process
- to start the pumping of the different glue components to the mixing unit (30) (340) after the determination of the mixing ratio,
**characterized in that,** in the computer program product further comprises code means, which are for gluing part elements of a laminate structure arranged to select polyurethane-based glue components having open times of different lengths and to control (360) the mixing ratio of the glue components as a function of time so that the open time of the glue coming out from the mixing unit (30) shortens after every part element fastened to the laminate structure towards the end of the gluing process (370), whereby the clamping time (380) of the part elements to be glued together of the laminate structure to be manufactured is as long as the clamping time of the last glue layer having the shortest open time, upon the expiry of which time all the glue layers have reached the target hardness.

## Patentansprüche

1. Verfahren zum Verkleben von Teilelementen einer laminierten Struktur, wobei das Verfahren Folgendes umfasst:
- in der Steuereinheit des Klebstoffherstellungsgeräts (100) werden mindestens zwei Komponenten des Klebstoffs und ein Härter ausgewählt (320), die bei der Verklebung der Teilelemente verwendet werden sollen,
- die Steuereinheit (40) des Klebstoffherstellungsgeräts (100) das gegenseitige Mischungsverhältnis der ausgewählten Komponenten zum Zeitpunkt des Beginns des Prozesses der Klebstoffherstellung bestimmt (330)
- das Pumpen der verschiedenen Komponenten in die Mischeinheit (30) nach dem Bestimmen des Mischungsverhältnisses gestartet wird (340)
- die Klebstoffkomponenten mit komponentenspezifischen Pumpen (20, 21, 22) in einem von der Steuereinheit (40) bestimmten Mischungsverhältnis in die Mischeinheit (30) gepumpt werden (350),
**dadurch gekennzeichnet, dass** es sich bei den ausgewählten Klebstoffkomponenten um Komponenten auf Polyurethanbasis handelt, die unterschiedlich lange offene Zeiten aufweisen, und dass bei dem Verfahren die Steuereinheit (40) das Mischungsverhältnis der auf ein Teilelement zu applizierenden Klebstoffkomponenten in Abhängigkeit von der Zeit so einstellt (360), dass sich die offene Zeit des aus der Mischeinheit (30) austretenden Klebstoffs nach jedem an der Laminatstruktur befestigten Teilelement gegen Ende (370) des Klebeprozesses verkürzt, wobei die Einspannzeit (380) der Teilelemente der zu verleimenden Laminatstruktur so lang ist wie die Einspannzeit der zuletzt verabreichten Leimschicht, die die kürzeste offene Zeit aufweist, nach deren Ablauf alle Leimschichten die Zielhärte erreicht haben.

2. Verfahren zum Verkleben nach Anspruch 1, **dadurch gekennzeichnet, dass** bei der Bestimmung des gegenseitigen Mischungsverhältnisses der Klebstoffkomponenten zu Beginn des Prozesses die Temperatur des beim Verkleben verwendeten Bereichs gemessen wird (310) und dass die Reaktionsgeschwindigkeitskurven der verschiedenen Mischungsverhältnisse bei der gemessenen Temperatur in die Bestimmung einbezogen werden.

3. Verfahren zum Verkleben nach Anspruch 2, **dadurch gekennzeichnet, dass** bei dem Verfahren der Temperaturanstieg im Bereich der Produktion durch Erhöhung des Anteils der Klebstoffkomponente mit der längsten offenen Zeit in der fertigen Mischung kompensiert wird und dass der Temperaturabfall im Bereich der Produktion durch Erhöhung des Anteils der Klebstoffkomponente mit der kürzesten offenen Zeit in der fertigen Mischung kompensiert wird.

4. Verfahren nach Anspruch 1, **dadurch gekennzeichnet, dass** das Mischungsverhältnis der Klebstoffkomponenten kontinuierlich verändert wird (360), sodass der Anteil der Klebstoffkomponente, die die kürzeste offene Zeit aufweist, unter kontinuierlicher Steuerung bis zum Ende des Prozesses der Klebstoffherstellung der miteinander zu verklebenden Elemente erhöht wird.

5. Verfahren zum Verkleben nach Anspruch 1, **dadurch gekennzeichnet, dass** das Mischungsverhältnis der Klebstoffpastenkomponenten schrittweise geändert wird (360), wenn mit der Herstellung einer neuen Klebstoffschicht auf dem zuletzt auf dem Laminat befestigten Teilelement begonnen wird.

6. Anordnung zur Herstellung einer Laminatstruktur, die aus Teilelementen besteht, wobei die Anordnung ein Klebstoffherstellungsgerät (100) umfasst, für ein Verfahren nach den Ansprüchen 1 bis 5, umfassend:
- Materialbehälter (10, 11, 12) für die Klebstoffpastenkomponenten
- eine getrennte Pumpe (20, 21, 22) für jede Klebstoffpastenkomponente, wobei die Pumpen so angeordnet sind, dass sie die Komponenten der herzustellenden Klebstoffpaste durch die Auslassleitungen (20a, 21a, 22a) zu der Mischeinheit (30) pumpen,
- eine Steuereinheit (40) des Klebstoffherstellungsgeräts (100), wobei die Steuereinheit angeordnet ist:
- um das gegenseitige Mischungsverhältnis der Klebstoffkomponenten zu Beginn des Prozesses der Klebstoffherstellung zu bestimmen (330)
- um das Pumpen der verschiedenen Klebstoffkomponenten in Verbindung mit dem Start (340) der Mischeinheit (30) zu starten
- um die Klebstoffkomponenten mit komponentenspezifischen Pumpen (20, 21, 22) in einem von der Steuereinheit (40) bestimmten Mischungsverhältnis zur Mischeinheit (30) zu pumpen (350), **dadurch gekennzeichnet, dass** die ausgewählten Klebstoffkomponenten auf Polyurethan basierende Komponenten sind, die unterschiedlich lange offene Zeiten aufweisen, und die Steuereinheit (40) bestimmt ist, um das Verhältnis der Komponenten des auf ein Teilelement aufzutragenden Klebstoffs in Abhängigkeit von der Zeit zu steuern (360), sodass sich die offene Zeit des aus der Mischeinheit (30) austretenden Klebstoffs nach jedem an der Laminatstruktur befestigten Teilelement gegen Ende des Klebeprozesses verkürzt, wodurch die Klemmzeit der miteinander zu verklebenden Teilelemente des herzustellenden Laminats so lang ist wie die Klemmzeit der zuletzt verabreichten Klebstoffschicht, die die kürzeste offene Zeit aufweist, wenn die Zeit abgelaufen ist, in der alle Leimschichten die Zielhärte aufweisen.

7. Anordnung zur Herstellung einer Laminatstruktur, die aus Teilelementen nach Anspruch 6 besteht, **dadurch gekennzeichnet, dass** in dem Herstellungsgerät die Temperatur des für die Verklebung zu verwendenden Bereichs zur Messung (310) bestimmt ist, wobei die Temperatur zur Berücksichtigung bei der Bestimmung des gegenseitigen Mischungsverhältnisses der Klebstoffkomponenten zu Beginn des Prozesses der Klebstoffherstellung bestimmt ist, und die Reaktionsgeschwindigkeitskurven der verschiedenen Mischungsverhältnisse bei der gemessenen Temperatur zur Berücksichtigung bei der Bestimmung dienen.

8. Anordnung zur Herstellung einer Laminatstruktur, die aus Teilelementen nach Anspruch 7 besteht, **dadurch gekennzeichnet, dass** in dem Herstellungsgerät der Temperaturanstieg des Bereichs durch Erhöhung des Anteils der Klebstoffkomponente mit der längsten offenen Zeit in der fertigen Mischung kompensiert wird und dass der Temperaturabfall des Bereichs durch Erhöhung des Anteils der Klebstoffkomponente mit der kürzesten offenen Zeit in der fertigen Mischung kompensiert wird.

9. Anordnung zur Herstellung einer Laminatstruktur, die aus Teilelementen nach Anspruch 6 besteht, **dadurch gekennzeichnet, dass** das Mischungsverhältnis der Klebstoffpastenkomponenten so angeordnet ist, dass es kontinuierlich verändert wird (360), sodass der Anteil der Klebstoffkomponente mit der kürzeren offenen Zeit unter kontinuierlicher Steuerung bis zum Ende des Prozesses der Klebstoffherstellung erhöht wird.

10. Anordnung zur Herstellung einer Laminatstruktur, die aus Teilelementen nach Anspruch 6 besteht, **dadurch gekennzeichnet, dass** das Mischungsverhältnis der Klebstoffpastenkomponenten so angeordnet ist, dass es schrittweise geändert wird (360), wenn die Herstellung des Klebstoffs auf dem zuletzt mit dem Laminat verklebten Teilelement beginnt.

11. Computerprogrammprodukt, das Computerprogramm-Codiermittel umfasst, die auf einem computerlesbaren Speichermedium gespeichert sind, wobei die Codiermittel, wenn das Computerprogrammprodukt auf einem Computer zur Ausführung des Verfahrens nach den Ansprüchen 1 bis 5 ausgeführt wird, angeordnet sind, um
- die mindestens zwei Klebstoffkomponenten und den Härter des Klebstoffs auszuwählen (320), der für das Verkleben der Laminatstruktur verwendet werden soll,
- das gegenseitige Mischungsverhältnis der ausgewählten Klebstoffkomponenten zum Zeitpunkt des Beginns des Prozesses der Klebstoffherstellung zu bestimmen (330)
- das Pumpen der verschiedenen Klebstoffkomponenten zur Mischeinheit (30) zu starten (340), nachdem das Mischverhältnis bestimmt wurde,
**dadurch gekennzeichnet, dass** das Computerprogrammprodukt ferner Codiermittel umfasst, die zum Verkleben von Teilelementen einer Laminatstruktur angeordnet sind, um Klebstoffkomponenten auf Polyurethanbasis mit unterschiedlich langen Offenzeiten auszuwählen und das Mischungsverhältnis der Klebstoffkomponenten in Abhängigkeit von der Zeit so zu steuern (360), dass sich die offene Zeit des aus der Mischeinheit (30) austretenden Klebstoffs nach jedem an der Laminatstruktur befestigten Teilelement gegen Ende des Verklebeprozesses (370) verkürzt, wobei die Einspannzeit (380) der miteinander zu verleimenden Teilelemente der herzustellenden Laminatstruktur so lang ist wie die Einspannzeit der letzten Leimschicht, die die kürzeste offene Zeit aufweist, wobei nach Ablauf dieser Zeit alle Leimschichten die Zielhärte erreicht haben.

## Revendications

1. Procédé de collage pour coller des éléments de pièce d'une structure stratifiée, dans lequel procédé :
- au moins deux composants de colle et un durcisseur à utiliser dans le collage des éléments de pièce sont sélectionnés (320) au niveau de l'unité de commande de l'appareil de fabrication de colle (100),
- l'unité de commande (40) de l'appareil de fabrication de colle (100) détermine (330) le rapport de mélange mutuel des composants de colle sélectionnés au moment de démarrage du processus de fabrication de colle
- le pompage des différents composants de colle vers l'unité de mélange (30) est démarré (340) après la détermination du rapport de mélange
- les composants de colle sont pompés (350) vers l'unité de mélange (30) avec des pompes spécifiques aux composants (20, 21, 22) dans un rapport de mélange déterminé par l'unité de commande (40),
**caractérisé en ce que**, les composants de colle sélectionnés sont des composants à base de polyuréthane ayant des temps d'ouverture de différentes longueurs et dans le procédé, l'unité de commande (40) règle (360) le rapport de mélange des composants de colle à administrer sur un élément de pièce en fonction du temps de sorte que le temps d'ouverture de la colle sortant de l'unité de mélange (30) diminue après chaque élément de pièce fixé à la structure stratifiée vers la fin (370) du processus de collage, moyennant quoi le temps de serrage (380) des éléments de pièce de la structure stratifiée à coller ensemble est aussi long que le temps de serrage de la dernière couche de colle administrée ayant le temps d'ouverture le plus court, à l'expiration duquel toutes les couches de colle ont atteint la dureté cible.

2. Procédé de collage selon la revendication 1, **caractérisé en ce que** lors de la détermination du rapport de mélange mutuel des composants de colle au moment de démarrage du processus, la température de la zone de production utilisée dans le collage est mesurée (310) et **en ce que** les courbes de vitesse de réaction des différents rapports de mélange à la température mesurée sont prises en compte dans la détermination.

3. Procédé de collage selon la revendication 2, **caractérisé en ce que** dans le procédé, l'élévation de température de la zone de production est compensée en augmentant la proportion du composant de colle ayant le temps d'ouverture le plus long dans le mélange de colle fini et **en ce que** la chute de température de la zone de production est compensée en augmentant la proportion du composant de colle ayant le temps d'ouverture le plus court dans le mélange de colle fini.

4. Procédé d'encollage selon la revendication 1, **caractérisé en ce que** le rapport de mélange des composants de pâte de colle est modifié en continu (360) de sorte que la proportion du composant de colle ayant le temps d'ouverture le plus court est augmentée avec une commande continue jusqu'à la fin du processus de fabrication de colle des éléments à coller ensemble.

5. Procédé de collage selon la revendication 1, **caractérisé en ce que** le rapport de mélange des composants de pâte de colle est modifié (360) par étapes lors du démarrage de la fabrication d'une nouvelle couche de colle sur l'élément de pièce fixé en dernier sur le stratifié.

6. Agencement de fabrication d'une structure stratifiée composée d'éléments de pièce, lequel agencement comprend un appareil de fabrication de pâte de colle (100), pour un procédé selon les revendications 1 à 5, comprenant :
- des conteneurs de matériau (10, 11, 12) pour les composants de pâte de colle
- une pompe séparée (20, 21, 22) pour chaque composant de pâte de colle, lesquelles pompes sont agencées pour pomper les composants de la pâte de colle à fabriquer à travers les tuyaux de sortie (20a, 21a, 22a) vers l'unité de mélange (30),
- une unité de commande (40) de l'appareil de fabrication de pâte de colle (100), laquelle unité de commande est agencée :
- pour déterminer (330) le rapport de mélange mutuel des composants de colle au moment de démarrage du processus de fabrication de colle
- pour démarrer le pompage des différents composants de colle en connexion avec le démarrage (340) de l'unité de mélange (30)
- pour pomper (350) les composants de colle vers l'unité de mélange (30) avec des pompes spécifiques aux composants (20, 21, 22) dans un rapport de mélange déterminé par l'unité de commande (40), **caractérisé en ce que** les composants de colle sélectionnés sont des composants à base de polyuréthane ayant des temps d'ouverture de longueurs différentes et l'unité de commande (40) est agencée pour commander (360) le rapport des composants de la colle à administrer sur un élément de pièce en fonction du temps, de sorte que le temps d'ouverture de la colle sortant de l'unité de mélange (30) se raccourcit après chaque élément de pièce fixé à la structure stratifiée vers la fin du processus de collage, moyennant quoi le temps de serrage des éléments de pièce à coller ensemble du stratifié à fabriquer est aussi long que le temps de serrage de la dernière couche de colle administrée ayant le temps d'ouverture le plus court, à l'expiration duquel toutes les couches de colle ont atteint la dureté cible.

7. Agencement de fabrication d'une structure stratifiée composée d'éléments de pièce selon la revendication 6, **caractérisé en ce que** dans l'appareil de fabrication, la température de la zone de production à utiliser dans le collage est agencée pour être mesurée (310), laquelle température est agencée pour être prise en compte dans la détermination du rapport de mélange mutuel des composants de colle au moment du démarrage du processus de fabrication de colle et **en ce que** les courbes de vitesse de réaction des différents rapports de mélange à la température mesurée sont agencées pour être prises en compte dans la détermination.

8. Agencement de fabrication d'une structure stratifiée composée d'éléments de pièce selon la revendication 7, **caractérisé en ce que** dans l'appareil de fabrication, l'élévation de température de la zone de production est agencée pour être compensée en augmentant la proportion du composant de colle ayant le temps d'ouverture le plus long dans le mélange de colle fini et **en ce que** la chute de température de la zone de production est agencée pour être compensée en augmentant la proportion du composant de colle ayant le temps d'ouverture le plus court dans le mélange de colle fini.

9. Agencement de fabrication d'une structure stratifiée composée d'éléments de pièce selon la revendication 6, **caractérisé en ce que** le rapport de mélange des composants de pâte de colle est agencé pour être modifié en continu (360), de sorte que la proportion du composant de colle ayant le temps d'ouverture le plus court est augmentée avec une commande continue jusqu'à la fin du processus de fabrication de colle.

10. Agencement de fabrication d'une structure stratifiée composée d'éléments de pièce selon la revendication 6, **caractérisé en ce que** le rapport de mélange des composants de pâte de colle est agencé pour être modifié (360) par étapes lors du démarrage de la fabrication de colle sur l'élément de pièce collé en dernier sur le stratifié.

11. Produit de programme informatique, qui comprend des moyens de code de programme informatique stockés sur un support de stockage lisible par ordinateur, lesquels moyens de code, lorsque ledit produit de programme informatique est exécuté sur un ordinateur pour exécuter le procédé selon les revendications 1 à 5, sont agencés
- pour sélectionner (320) les au moins deux composants de colle et le durcisseur de la colle à utiliser dans le collage de la structure stratifiée,
- pour déterminer (330) le rapport de mélange mutuel des composants de colle sélectionnés au moment de démarrage du processus de fabrication de colle
- pour commencer le pompage des différents composants de colle vers l'unité de mélange (30) (340) après la détermination du rapport de mélange
**caractérisé en ce que,** dans le produit de programme informatique, il comprend en outre des moyens de code, qui sont destinés à coller des éléments de pièce d'une structure stratifiée agencés pour sélectionner des composants de colle à base de polyuréthane ayant des temps d'ouverture de différentes longueurs et pour commander (360) le rapport de mélange des composants de colle en fonction du temps de sorte que le temps d'ouverture de la colle sortant de l'unité de mélange (30) diminue après chaque élément de pièce fixé à la structure stratifiée vers la fin du processus de collage (370), moyennant quoi le temps de serrage (380) des éléments de pièce à coller ensemble de la structure stratifiée à fabriquer est aussi long que le temps de serrage de la dernière couche de colle ayant le temps d'ouverture le plus court, à l'expiration duquel toutes les couches de colle ont atteint la dureté cible.
